(19)

Europäisches
Patentamt
European
Patent Office
Office européen
des brevets

(11)     EP 3 916 652 A1

(12)     **EUROPEAN PATENT APPLICATION**

(43) Date of publication:
01.12.2021   Bulletin 2021/48

(51) Int Cl.:
G06Q 10/04 (2012.01)          G06Q 10/06 (2012.01)
G06Q 50/28 (2012.01)          G06Q 50/30 (2012.01)
G06N 3/10 (2006.01)           G06N 3/08 (2006.01)

(21) Application number: 20177006.2

(22) Date of filing: 28.05.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **Bayerische Motoren Werke**
**Aktiengesellschaft**
**80809 München (DE)**

(72) Inventors:
• **Hamzehi, Sascha**
**85221 Dachau (DE)**
• **Tian, Jilei**
**Chicago, IL Illinois 60601 (US)**
• **Cao, Yang**
**Chicago, IL Illinois 60601 (US)**

(54)     **A METHOD AND NEURAL NETWORK TRAINED BY REINFORCEMENT LEARNING TO**
**DETERMINE A CONSTRAINT OPTIMAL ROUTE USING A MASKING FUNCTION**

(57)     Embodiments generally relate to a method, a neural network trained by annotation-free reinforcement learning to determine a constraint optimal route connecting a plurality of waypoints using a masking function. The method comprising comprises obtaining waypoint information on the plurality of waypoints and parameter information on a plurality of route parameters. First, the method comprises initially determining an initial sample route based on the waypoint information, initial assessment information for the initial sample route, and the masking function based on the parameter information and the initial assessment information. Second, the method comprises iteratively determining a plurality of further sample routes and further assessment information by constraining the waypoint information using the masking function, determining a further sample route based on the constrained waypoint information, and determining further assessment information for the further sample route. Third, the method comprises updating the masking function based on the further assessment information and selecting the route connecting the plurality of waypoints from the initial sample route and the plurality of further sample routes based on the initial and further assessment information.

Fig. 1

EP 3 916 652 A1

**Description**

**Field**

Embodiments generally relate to a method to determine a constraint optimal route connecting a plurality of waypoints using a masking function. In particular, embodiments relate to a neural network and a method for training a neural network by annotation-free reinforcement learning to determine a constraint optimal route connecting a plurality of waypoints using a masking function.

**Background**

The traveling salesman problem (TSP) poses the question: What is the shortest possible route that visits each city in a list and returns to the original city? The TSP is one of the most studied problems in combinatorial optimization and is an NP-hard problem, meaning that complexity increases, exceeding polynomial scope, as the number of nodes (i.e. cities in the TSP) increase. Neural networks have the potential to better solve optimization problems like the TSP by automatically discovering their heuristics based on the training data. However, in practical applications, the efficiency of solving the TSP can be increased by narrowing the scope of possible outcomes using constraints, particularly time-windows. Hence, there may be a desire for an efficient route optimization solution to support scalable route planning, charging, delivery, or fleet management services.

**Summary**

Embodiments generally relate to a method, an apparatus, and a machine-readable medium for connecting a plurality of waypoints using a masking function. According to an embodiment, a method for determining a route connecting a plurality of waypoints using a masking function comprises obtaining waypoint information on the plurality of waypoints and parameter information on a plurality of route parameters. First, the method comprises initially determining an initial sample route based on the waypoint information, initial assessment information for the initial sample route, and the masking function based on the parameter information and the initial assessment information. Second, the method comprises iteratively determining a plurality of further sample routes and further assessment information by constraining the waypoint information using the masking function, determining a further sample route based on the constrained waypoint information, and determining further assessment information for the further sample route. Third, the method comprises updating the masking function based on the further assessment information and selecting the route connecting the plurality of waypoints from the initial sample route and the plurality of further sample routes based on the initial and further assessment information.

Routing problems estimate the optimum path to visit a plurality of waypoints based on graph models and maps. However, these problems, the most famous of which is the Traveling Salesman Problem (TSP), are mathematically intense to solve. The TSP is a well-known problem in computer science where, given a list of cities and the distances between each pair of cities, the goal is to find the shortest route possible that visits each city exactly once and returns to the point of origin. In the present application, "cities" may be any location or waypoint, such as sightseeing points, delivery locations, or bus stops. These points may be static or dynamically changing, such as when construction forces the relocation of a bus stop or when a customer requests a pickup from a car-sharing or carpooling service.

The simplest method to solve routing problems like the TSP is to try all possible permutations and determine which one is the shortest using a brute-force search method. The computational complexity for a brute-force solution is within a polynomial factor of $O(n!)$. However, this becomes impractical even with ten nodes resulting in a search of 10! or 3,628,800 possible combinations. Therefore, it is natural to leverage heuristics-for example, by using a masking function-to limit the search space and speed up the search process by reducing computational time for these routing problems. A masking function thus may be able to augment traditional search methods such as brute force searching or conventional neural network approaches to offer a superior technical solution.

In real-world applications of the TSP, it is possible to apply constraints to the search space of the problem. This is known as constraint optimization, which may narrow down or mask the solution set that must be searched. The mask function may also enable the constraint modeling for an actor-network function in a neural network that uses actor-critic reinforcement learning. The mask function enables the actor-network to understand that some solutions in the search and solution space are invalid or infeasible. The mask function therefore also enables the functionality that some infeasible solutions cannot occur in the actor network's predictive solution. Such constraints may include a route that has different traffic conditions depending on the time of day, routes that may change the driving direction at different times, the business hours of a location, or the location's preferred schedule for delivery.

When using constraint optimization for route planning it may be desirable to have an algorithm or masking function that has low complexity. Constraints used in a masking function come from real-world requirements. One such constraint may include locations that may be tied with a higher value than others. Another constraint may include that time windows, such as hours of operation that must be met or else the location will be excluded. In these situations, a masking function would constrain or mask possible solutions that do not contain repeat location visits or contain locations that are hard or impossible to reach during their hours of operation.

The method may further comprise the masking function setting the probability of at least one of the plurality of waypoints from appearing in the further sample route. A masking function may include an update function or component that allows new or additional locations to be masked in subsequent sample routes as more or updated information is determined on what locations are plausible or possible in a solution set.

The probability set by the masking function may be binary. This means that the probability of the mask for each location in the tensor may be Boolean and that the only two possibilities are that a location or node is included in the further sample routes (e.g. the probability is set to one) or that they are not included (e.g. the probability is set to zero). The probability may also be a range from 0% to 100%. This would allow more granularity in selecting a final solution set or route. This means that if a constraint is limiting to a possible solution, such as if the operation hours of a location are narrow, the probability of that location may be set to a lower value, meaning that the location is less likely to feature in a final solution set or route. However, if the probability is set to a non-zero value, it may feature in a solution set.

There may be an embodiment of the method where initially determining the initial sample route based on the waypoint information is done stochastically. Stochastically weighting the waypoint information introduces random variations into the system, either by giving the network stochastic transfer functions or by giving it stochastic weights. This is useful for optimization problems because the random fluctuations help it escape from local minima. A local (or relative) minimum is a point in a domain that is the lowest point within some distance of that point. It may not be the lowest point in the domain. By introducing randomness in the weighting of the initial route the probability increases that the algorithm will find the shortest or most optimal route overall rather than a short route relative to other similar routes.

In an embodiment of the method, a start-point and an endpoint of a route connecting a plurality of waypoints are identical. In the TSP it may be important for the start and ending route to be identical. This serves to mimic real-world situations where a delivery driver must begin and end at the same depot. By establishing this real-world constraint on the network, it helps eliminate routes without identical start and endpoints.

In another embodiment of the method, the waypoint information and the parameter information are obtained from a plurality of mobile devices, a vehicle, and a data source for locality information. The information on waypoints may be obtained from a variety of sources. A mobile device can provide real-time location information, traffic information, and information on deliveries, particularly if an app is used. The vehicle can provide information on the characteristics of the vehicle, such as fuel efficiency, average speed, idle time, etc. This may help inform a route and provide further constraints. For instance, a route may be prioritized if it provides greater fuel efficiency even if it is technically longer than another route. Location data sources may provide traffic information, weather information, and other information services. Like scheduled road work.

In another embodiment, the method may be performed by a neural network. The neural network including a plurality of nodes connected by a plurality of edges, an edge having a weight, the nodes divided into at least an input layer, an output layer, and a plurality of hidden layers, the neural network also including the masking function that applies to an at least one hidden layer.

A neural network (or artificial neural network) is a network or circuit composed of artificial neurons or nodes. It is modeled after biological neurons and aims to solve artificial intelligence (AI) problems. The connections of the biological neuron are modeled as weights. A positive weight reflects an excitatory connection, while negative values mean inhibitory connections. All inputs are modified by weighted sum including bias item. This activity is referred to as a linear combination. Finally, an activation function controls the amplitude of the output. For example, an acceptable range of output is usually between zero and one or it could be between negative one and one. Using a neural network may be faster than solving similar routing problems with traditional methods (e.g. mixed integer programming) therefore enabling a faster response rate for users.

These neural networks may be used for predictive modeling, adaptive control, and applications where they can be trained via a dataset. Self-learning resulting from experience can occur within networks, which can derive conclusions from a complex and seemingly unrelated set of information. Neural architecture called pointer networks may be used to learn the conditional probability of an output node sequence pointing to positions in an input node sequence that can is applicable for the TSP.

A neural network model can be trained with reinforcement learning to solve routing problems with time constraints and service times for route operations. The neural network model, or pointer network, can be trained with previously made routing data to learn about the best routes. This may not require the data annotation, so make the training easy and appealing.

First, a training, validation, and test set of data is generated which is processed in tensors to be the basis for the learning pointer network. In mathematics, a tensor is an algebraic object that describes a relationship between sets of algebraic objects related to a vector space. A tensor may be represented as an array, which is potentially multidimensional. Objects that tensors may map between include vectors, scalars, and, recursively, even other tensors. The pointer network may be trained with a reinforcement learning algorithm called an asynchronous actor-critic algorithm. After the network is trained the network can predict or recommend a suitable route based on city data, user information, time, and spatial requirements such as time windows with service times for on route operations (e.g. sightseeing tours, restaurant trips, car sharing collaborative routes with on route intermediary stops). The location requires the input data of coordinates of vehicles, users and used on route information such as the locations of restaurants, sights, and others.

In an alternative embodiment, data may include ratings and other capacitated information about users and vehicles, as well as resource information such as fuel and energy consumption of the vehicles or other mobility options.

A masking function may include a tensor range or other data structure that is updated depending on previously sampled solutions. The tensor masks the probabilities assigned to each constrained location in a solution. In other words, if the mask-which equals the dimension of the batch size-is set to zero at an index for a specific location, then the related assignment index probability of that location will be set to zero as well. If the masking function contains a zero at a specific index, then the location with that index cannot occur in the sampling and final solution. If the mask function contains a one, then the location with that index can occur in the final solution.

A masking function may provide an efficient algorithm solution to address constraint optimization in service seeking to solve the TSP and related problems. A masking function may be fundamental for scalable service to respond in meaningful time, particularly those dealing with different constraints and a high number of nodes.

Offering an improved response time with good accuracy may also create an improved user experience.

Many machine learning techniques involve the estimation of an algorithm that maps between a set of inputs and a set of outputs (i.e. labels). Estimating that algorithm is referred to as training and is typically performed by analyzing a training set of inputs and their corresponding labels. During the analysis, an optimization is performed to find the algorithm that best explains the mapping between the inputs and the corresponding labels in the labeled training set. The terms best, maximum, or optimum do not necessarily refer to a global metric but the metric the machine learning technique can find. In many cases, a local maximum of the likelihood of the mapping between the features and the label given the function is sufficient. Different machine learning techniques perform the aforementioned optimizations in different ways. For example, naive Bayes classifiers assume independence of the inputs given the class and estimate an algorithm that explains the association between the inputs and the label. As another example, artificial neural networks model the problem domain as systems of interconnected nodes that send messages to one another, often with some nodes representing the inputs, some nodes representing intermediary or "hidden" nodes, and some nodes representing the outputs. Thus, in such models, the estimation of the algorithm involves determining the optimal weights between the edges connecting the nodes that are most likely to explain the mappings presented in the training set. Once a network is trained, a new data point of inputs can be fed into the network to obtain the predicted label for that data point. In most cases, networks output a set of potential labels and a confidence metric or other measure of the probability that the classification is correct. In most cases, the label to which the network assigned the highest confidence is considered the predicated label.

A masking function may not require the ground truth as the label data for model training. This makes the model training self-learning and more attractive to services that implement it. Generally, in machine learning, ground truth data is required to train the machine and develop the optimum function between the inputs and the classifications. The label data set can be collected in a myriad of different ways. One way is to collect a sample of information that one would encounter in a typical scenario used by the service. Then the information would have to be verified independently from the machine, typically manually by experts. The verified data can be used during the training phase of the machine learning algorithm to train the classifier. The sample information can then be manually labeled by the experts to identify which samples present positive information to the machine and which present negative. Those labels can then be used as the ground truth.

Another aspect of the masking function is that it may reduce the computational complexity of the neural network. Generally, a neural network designed to solve the TSP may not be able to find a solution when dealing with 30 or more nodes. A neural network coupled with the masking function can significantly improve this case (e.g. adequately solving the TSP with 50 or more nodes) by reducing the search possibilities that may be searched. Also, the service may need to address multiple requests in a short time. The low computational complexity of the masking function may enable faster response times by the service, more responses at a time, or both. Furthermore, the service's route planning may need to update time by time (e.g. due to changing traffic or weather). Therefore, the masking function enables the solution to be updated more quickly than retraining the underlying machine learning implementation of the solution.

In an embodiment, there may be a method of training the neural network. The method comprising providing the waypoint information and the parameter information to the input layer wherein the input layer processes the waypoint information and the parameter information into a plurality of static tensors and dynamic tensors and conducting an initial pass through the plurality hidden layers. The initial pass or an actor-network function may determine the initial sample route, update the dynamic tensors for the initial sample route, and initialize the mask function based on the static tensors and the dynamic tensors. The initial route may be found or initiated by sampling from a random uniformly probability distribution. This may be done during an initiation phase of an actor module in a neural network using actor-critic reinforcement learning. The method further comprises conducting a plurality of further passes through the plurality of hidden layers to adjust the weight of the edges, apply the mask function wherein the mask function constrains the nodes of the at least one hidden layer, determine the further sample route and updated dynamic tensors for the further sample route. The method also includes updating the masking function based on the updated tensors and receiving a state of the neural network at the output layer.

In another embodiment the at least one hidden layer comprises at least one of the group of a: embedder layer, attention layer, pointer-network layer, or decoder layer. In another embodiment of the method, the mask function applies to at least the attention, pointer-network, and decoder layers.

In a further embodiment, the edges of the nodes are stochastically weighted before the method conducts an initial pass. Stochastic refers to a variable process where the outcome involves some randomness and has some uncertainty. It is a mathematical term and is closely related to randomness and probabilistic and can be contrasted to the idea of deterministic. Weighting the edges stochastically may produce better route planning results creating a balance between exploring the search space and exploring what has already been learned about the search space. This may prevent a machine learning algorithm from repeatedly arriving at the same or similar conclusions based on incomplete training data. Stochastically weighting edges may allow the algorithm to avoid getting stuck and achieve results that deterministic (non-stochastic) algorithms cannot achieve. In an embodiment, the method may further comprise preprocessing the waypoint information before providing the waypoint information to the input layer.

Embodiments may be based on using a machine-learning model or machine-learning algorithm. Machine learning may refer to algorithms and statistical models that computer systems may use to perform a specific task without using explicit instructions, relying on models and inference instead. For example, in machine-learning, instead of a rule-based transformation of data, a transformation of data may be used, which is inferred from an analysis of historical and/or training data. For example, the content of images may be analyzed using a machine-learning model or using a machine-learning algorithm. For the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g. a classification algorithm, a regression algorithm or a similarity learning algorithm. Classification algorithms may be used when the outputs are restricted to a limited set of values, i.e. the input is classified as one of the limited sets of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied, and an unsupervised learning algorithm may be used to find structure in the input data, e.g. by grouping or clustering the input data, finding commonalities in the data. Clustering is the assignment of input data comprising a plurality of input values into subsets or clusters so that input values within the same cluster are similar according to one or more, possibility predefined, similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input, but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at identifying input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represent the learned knowledge, e.g. based on the training performed by the machine-learning algorithm. In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data, e.g. in classification or regression analysis. Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

## Brief Description of the Drawings

Some embodiments of methods and networks will be described in the following only by way of example and with reference to the accompanying figures, in which:

**Fig. 1** shows a block diagram of an embodiment of a method for determining a route connecting a plurality of waypoints using a masking function.
**Fig. 2** shows an example route optimization problem with time window and service time constraints.
**Fig. 3** shows a simplified schematic of a neural network performing an embodiment of the method.
**Fig. 4** shows a schematic of a neural network performing an embodiment of the method.
**Figs. 5A and 5B** show a block diagram of an embodiment of the masking function. Fig. 5A shows the pass through the pointer network. Fig. 5B shows the dynamic tensor update function.

**Detailed Description**

Various embodiments will now be described more fully with reference to the accompanying drawings in which some embodiments are illustrated. The thicknesses of lines, layers, and/or regions in the figures may be exaggerated for clarity.

Accordingly, while further embodiments are capable of various modifications and alternative forms, some particular embodiments thereof are shown in the figures and will subsequently be described in detail. However, this detailed description does not limit further embodiments to the particular forms described. Further embodiments may cover all modifications, equivalents, and alternatives falling within the scope of the disclosure. Same or like numbers refer to like or similar elements throughout the description of the figures, which may be implemented identically or in modified form when compared to one another while providing for the same or similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations (i.e. only A, only B, as well as A and B) if not explicitly or implicitly defined otherwise. An alternative wording for the same combinations is "at least one of A and B" or "A and/or B". The same applies, *mutatis mutandis,* for combinations of more than two elements.

The terminology used herein to describe particular embodiments is not intended to be limiting for further embodiments. Whenever a singular form such as "a," "an" and "the" is used, and using only a single element is neither explicitly nor implicitly defined as being mandatory, further embodiments may also use plural elements to implement the same functionality. Likewise, when functionality is subsequently described as being implemented using multiple elements, further embodiments may implement the same functionality using a single element or processing entity. It will be further understood that the terms "comprises," "comprising," "includes" and/or "including," when used specify the presence of the stated features, integers, steps, operations, processes, acts, elements, and/or components but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the embodiments belong.

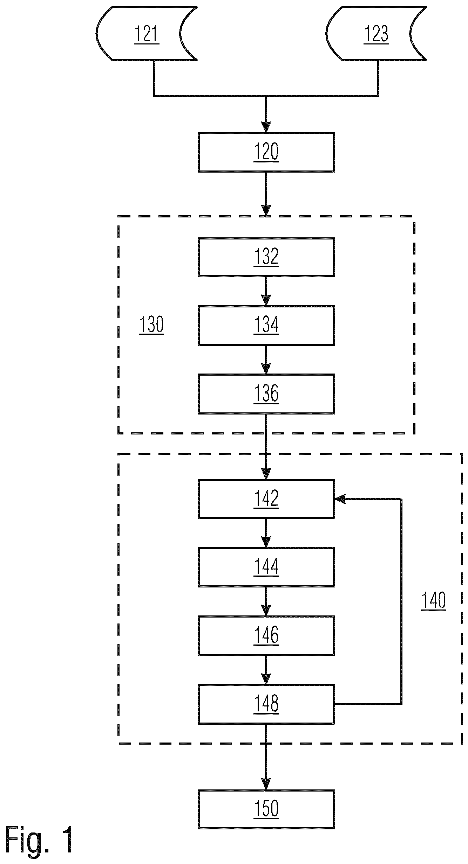

Fig. 1 shows a block diagram of an embodiment of a method 100 for determining a route connecting a plurality of waypoints using a masking function. The method 100 comprises obtaining 120 waypoint information 121 on the plurality of waypoints and parameter information 123 on a plurality of route parameters. Then, initially determining an initial sample route 132 based on the waypoint information, determining an initial assessment information 134 for the initial sample route, and the determining masking function 136 based on the parameter information and the initial assessment information. The method further comprises iteratively determining 140 a plurality of further sample routes and further assessment information by constraining 142 the waypoint information using the masking function. Then, determining a further sample route 144 based on the constrained waypoint information and determining further assessment information 146 for the further sample route. And then, updating the masking function 148 based on the further assessment information. The method in this embodiment concludes by selecting 150 the route connecting the plurality of waypoints from the initial sample route and the plurality of further sample routes based on the initial and further assessment information.

Waypoints are the various locations where a traveler may go. For example, waypoint information 121 may be addresses or other geographic information of locations such as stores, homes, government buildings, or just generic place information. A waypoint may be a single point or denote a larger area such as a building or a field. Waypoints may have multiple sub-points, such as the loading bays of a large distribution center where the decision on what time to visit the distribution center may be determined by the availability of certain sub-points. Parameter information 123 may be information related to the waypoints such as the time they are open or closed, the amount of time expected to spend at each waypoint, a priority level of the waypoints, information on the customer that may be present at a waypoint, or any other information that may characterize the waypoint or affect the masking function. For example, if the waypoints represent delivery locations some waypoints may be more vulnerable depending on the type of customer or item being delivered. As a result, if the waypoints correlate to valuable customers, those areas may be prioritized over other areas. Also, waypoints may be prioritized by the amount of traffic determined between them. For example, if waypoints are only connected by congested road arteries. The prioritization may be accomplished by penalizing routes that visit the prioritized areas during rush hours. For example, the distance metric for paths leading to the prioritized areas may be given a weight to artificially increase the distance the later the area is placed along the route. Because straight line paths are typically not available between the waypoints in the real world. Parameter information 123 may include a map of the roads or trails to reach the waypoints or the weight of the paths connecting the waypoints may be obtained from external data. The distance between the waypoints may be set to incorporate the distance of the known roads or trials that connect the waypoints instead of the straight-line distance. There are several well-known solutions to the TSP, such as trying all permutations of routes (also known as brute force search) as well as heuristic and approximation algorithms (for example, nearest neighbor, pairwise exchange, Christofides' algorithm, etc.). After a solution has been selected 150, additional method steps may include sending a message to a device associated with the traveler or another user that includes or links to a map identifying the shortest route. Additionally, the route may also be given in the form of written directions.

Constraining the waypoint information using the masking function may be done by using time windows. The method may find a minimum cost route that visits as many locations as possible. Suppose locations are G = {0,1, ... N}, 0 is the start location, N is the end location.

Each location $i$ ($0 < i < N$) has:

- A service time $s_i$, the time needed for service at location $i$.
- A ready time $tw_{i,0}$, the service at $i$ can't start before $tw_{i,0}$. Waiting is allowed, suppose arrival time of $i$ is $arr_i$, if $arr_i < tw_{i,0}$, the waiting time is $tw_{i,0} - arr_i$.
- A due time $tw_{i,1}$, the service at $i$ must start before $tw_{i,1}$.

Locations or waypoints may be mandatory or optional. In some embodiments, all waypoints may be entirely mandatory or entirely optional. $Cost_{i,j}$ means travel time between nodes $i$ and $j$. It could be estimated from a location data source such as Here Technologies, Inc. HERE API. Distance may be used to estimate travel time.

The method 100 may use mixed integer linear programming decision variables, including:

- A binary variable $x_{i,j}$ for path between location $i$ and $j$; $x_{i,j}$ = 1 means a path from $i$ to $j$ is included in the final route.
- A binary variable $z_i$ for any location $i$. $z_i$ = 1 means location $i$ is included in the final route. For mandatory location $j$: $z_j$ = 1, for optional location $j$: $z_j \leq 1$ .
- A time variable
$$y_{i,j} = \begin{cases} service\ start\ time\ at\ node\ i,\ if\ x_{i,j} = 1 \\ 0, otherwise \end{cases},$$
it is obvious that for any visited location $i$, the service time started at $i$ is: $y_i = \sum_j y_{i,j}$

The target masking function for the method 100 may be:

$$\sum_{j=1}^{N-1} \{y_{j,N} + x_{j,N} * (s_j + cost_{j,N})\} - \sum_{i=1}^{N-1} y_{0,i} - M * \sum_{j=1}^{N-1} z_j$$

The first part of the masking function is arriving time to destination N. For any valid route, there must exist one location $j^*$ which is the last visited location before returning to the destination. If $y_{j^*,N}$ is the service start time at $j^*$,then $y_{j^*,N} + s_{j^*} + cost_{j^*,N}$ is the time arriving at destination; for any other location $j$, $j \neq j^*$, $y_{j,N}$ = 0, $x_{j,N}$ = 0.

Similarly, the second part of the masking function is the starting time from the start location. So, the first part of the function is subtracted from the second part to produce the total time cost of the route.

The part of the function $\sum_{j=1}^{N-1} z_j$ means the visited location, M is a large value that is bigger than maximum travel cost between any two locations. This part ensures the solution will include as many locations or waypoints as possible.

When constraining 142 the waypoint information, the constraints may be:

- Route constraints (i.e. ensuring the result is a valid route), including:

  - $\sum_{i=1}^{N-1} x_{0,i} = 1.$ Start from start location.

  - $\sum_{i=1}^{N-1} x_{i,N} = 1.$ End at destination.

  - $\sum_{j=0}^{N-1} x_{j,i} = z_i$ and $\sum_{k=1}^{N} x_{i,k} = z_i$ for $0 < i < N$. Each location $i$ could be reach and depot no more than one time.

- Time window constraints, including:

  - $x_{i,j} * tw_{i,0} \leq y_{i,j} \leq x_{i,j} * tw_{i,1}$ for any $0 \leq i < N$ and $0 < j \leq N$. Service start time at location $i$ must fit in the time window. It also may ensure if $x_{i,i} = 0$, then $y_{i,i} = 0$.

  - $$\sum_{i=0}^{N-1}\{y_{i,j} + x_{i,j} * (s_i + cost_{i,j})\} \leq \sum_{k=1}^{N} y_{j,k}$$ for any $1 < j < N$. The left part is arrival time of $j$, the right part is leaving time of $j$, if $j$ is visited in the solution. If $j$ is not visited, both left & right part equals to 0.

  - $$tw_{N,0} \leq \sum_{i=1}^{N-1}\{y_{i,N} + x_{i,N} * (s_i + cost_{i,N})\} \leq tw_{N,1}.$$ Must arriving destination during predefined time window.

- Mandatory location constraints, including:

  - $z_k = 1$ for any mandatory location $k$.

In another embodiment of the method 100, updating the masking function 148 may further comprise setting the probability of at least one of the plurality of waypoints from appearing in the further sample route. The masking function enables a formulation of constraints that must be satisfied during the training and recommendation phase. In other words, the mask function enables to model constraints that can be learned during training and ultimately avoid false index assignments or recommendations within the given optimization problem. The constraints come from real-life requirements (e.g. that a location may be visited twice within the same route, time windows are not met, etc.) Also, the same correction can be provided during recommendation so that the prediction does not contain any wrong assignments against the constraint.

In an embodiment of the method 100, the probability is binary. Updating the masking function may involve a Boolean tensor range [0,1], which is updated depending on previously sampled solutions. The tensor range of the masking function masks the probabilities to assign a location index for a specific index assignment (e.g. logit). In other words, if the mask, which equals the dimension of the batch size, is set to 0 at a specific logit index, then the related assignment index probability of that location will be set to 0 as well. If the mask function contains a 0 at a specific index, the location with that index cannot occur in the sampling and final solution (i.e. if the mask function contains a 1, vice versa).

In an additional embodiment of the method 100, the probability is a range from 0% to 100%. By using a range instead of a Boolean value, the masking function may diminish or enhance sample routes without eliminating them.

In an embodiment of the method 100, initially determining the initial sample route based on the waypoint information 132 is done stochastically.

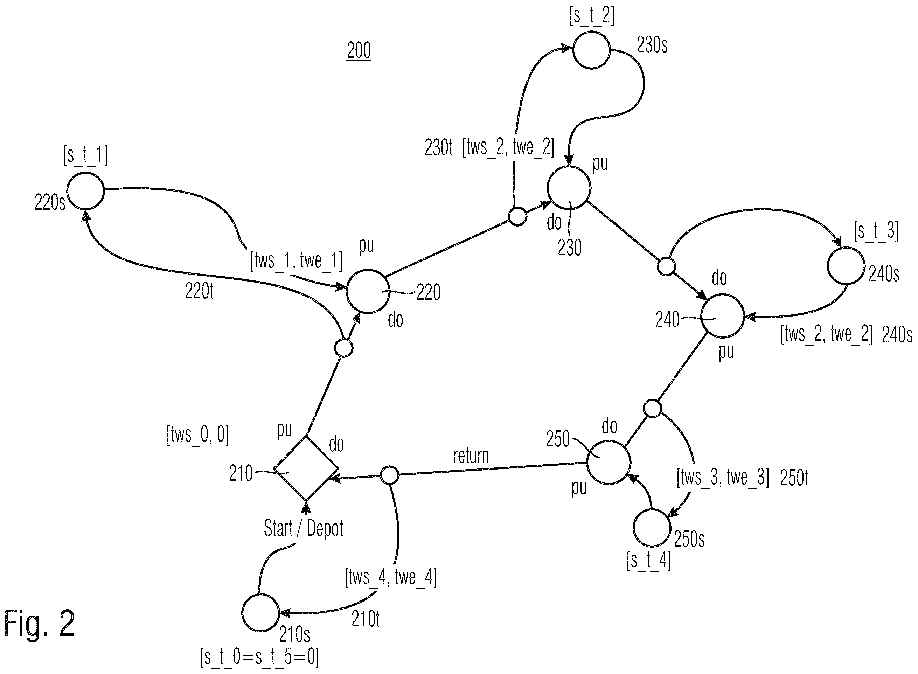

**Fig. 2** shows an example of a route optimization problem with time window and service time constraints. In the figure, *pu* means pick-up, *do* means drop-off, *s_t* means service time, and *tw_1, tw_1* means time windows at the next node.

The method comprises obtaining waypoint information on the plurality of waypoints 210, 220, 230, 240, and 250 and parameter information on a plurality of route parameters 210t and s to 250t and s. Then, initially determining an initial sample route based on the waypoint information, which may be done stochastically. For example, an initial sample route may begin at the start/depot 210 and then traverse the route 240, 230, 250, 240 again, and then return to the start/depot 210. The method further comprises determining an initial assessment information for the initial sample route, and the determining masking function based on the parameter information and the initial assessment information Based on the determination, the initial sample route is a worst-case example of route sampling. In the example, a very suboptimal route is sampled and even one node has been forgotten to traverse. So, this solution cannot be accepted.

The method further comprises iteratively determining a plurality of further sample routes and further assessment information by constraining the waypoint information using the masking function. Then, determining a further sample route based on the constrained waypoint information and determining further assessment information for the further sample route. And then, updating the masking function based on the further assessment information. For every graph sample route, the arrival and end time constraints are compared to the predicted arrival time based on the distance and traffic information. This information may be outputted by a router module. The service times may be rule-based look-up values that are added to the predicted arrival time.

The information received by the input nodes may be placed into static and dynamic tensors. Static tensors include all static features about the TSP dataset (i.e. there may be multiple TSPs as a batch). Examples of static features include node indices, distances, time windows, etc.

In fig. 2, the initial parameter data of the initial sample route may be presented in a static tensor as follows:

|  | [210, 250, 240, 220, 250, 210] |
| Predicted Arrival Time at Next Node | [0.2, 0.3, 0.2, 0.2, 0.2, 0.4] |
| Predicted Current Time at Node | [0.2, 0.3, 0.2, 0.2, 0.2, 0.4] |
| Required Arrival Time at Next Node | [0.2, 0.2, 0.2, 0.2, 0.2, 0.4] |
| Required End Time at Next Node | [0.2, 0.2, 0.2, 0.5, 0.2, 0.4] |
| Service Time at Node | [0.0, 0.2, 0.2, 0.5, 0.2, 0.0] |

Dynamic tensors include all dynamic features or inputs from the TSP dataset. Examples include capacities of vehicles when picking up a number of customers.

| Queue Time for the Next Node | [0.2, 0.3, 0.2, 0.2, 0.2, 0.4] |
| Delay Time for the Next Node | [0.2, 0.3, 0.2, 0.2, 0.2, 0.4] |

The masking function is initialized with both the static and dynamic tensors. A mask tensor is created, which may be a Boolean multidimensional matrix that is initialized with 1 values. An index sampling function then

The masking function sets the probabilities of the next sampled indices to 0 for a hard constraint or to a low value for soft constraints in the mask tensor. In case of a hard constraint, the sampling probability is set to 0 for a node visit that is not feasible. Subsequently, for the next sampling step, sampling this specific index is not possible.

| Queue Time next Node | [0.2, 7.3, 0.2, 0.2, 9.3, 0.4] |
| Delay Time next Node | [0.2, 8.4, 0.2, 8.3, 0.2, 0.4] |
| Mask (Is this a valid index tour?) | [1, 0, 1, 1, 0, 1] |
| Mask (Is the queue too high?) | [1, 0, 1, 0, 1, 1] |

Through each iteration, the static tensor is updated and the masking function constrains the updated static tensor if it produces a suboptimal route. For each iteration, a forward pass through the softmax of the pointer network is taken, which takes the assignment probabilities and mask as input. The updated dynamic tensor contains queue/delay values that model the fact that the current index permutation, also called a tour, must be evaluated after the decoding step. The masking function generally removes impossible sampling solutions depending on the features. After some index sequences are sampled, the masking functions track the invalid solutions and removes them from succeeding sampling steps. This is done by marking the invalid tensor entries by a zero, (since the matrix was initialized by all ones.). For the time window example coming earlier is acceptable, so therefore you can use the soft constraint mask. For arriving too late at a node of the TSP a hard constraint must be modeled. The mask is applied after a node is visited.

The method in this embodiment concludes by selecting the route connecting the plurality of waypoints from the initial sample route and the plurality of further sample routes based on the initial and further assessment information.

To extract a final result start from location 0, $v^0 = 0$, and find next visit location $v^1$ that has $x_{v0,v1} = 1$. From the constraints, there exists one node $v^1$ that has $x_{0,v1} = 1$, all other node $j$ have $x_{v0,j} = 0$. For $v^i$, find next node $v^{i+1}$ which have $x_{v^i,vi+1} = 1$. Then the service start time at $v^i$ equals to $y_{v^i,vi+1}$, arrival time $arr_{vi} = \{y_{v^i-1,v}^i + s_{vi-1} + cost_{vi-1,v}^i\}$. If the arrival time is earlier than $tw_{vi,0}$, the waiting time is $tw_{v^i,0}-arr_{vi}$; otherwise waiting time is 0. If $v^{i+1} \equiv N$, stop. The output results in reference code including the node visiting sequence. The format may be [node number, the service start time, the travel cost between the current node and the last node, waiting time of current node].

Fig. 2 also shows a method where a start-point and an endpoint of a route connecting a plurality of waypoints are identical. The start and end location may also have ready time and due time. For start location, it means the route must start between $tw_{0,0}$ and $tw_{0,1}$. For the end location, this means the route must end between $tw_{N,o}$ and $tw_{N,1}$. There may be no service time for the start and end location. This is for situations where the start and end location are a depot or some other location where the service time is immaterial to solving the route optimization problem.

In another embodiment of the method, the waypoint information and the parameter information may be obtained from a plurality of mobile devices, a vehicle, and a data source for locality information. The waypoint information and the parameter information may be processed so that it can fit in the required data or tensor structure and so that it can be fed to a pointer network forward pass function.

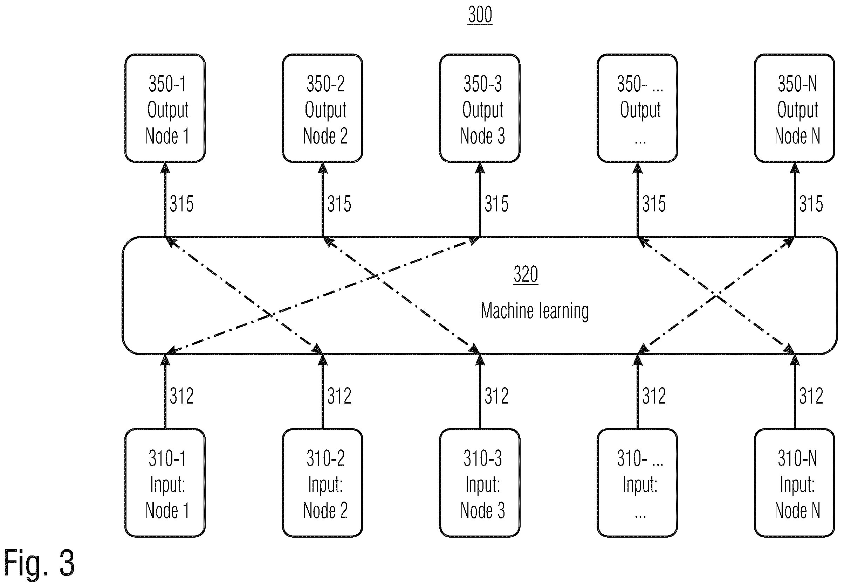

Fig. 3 shows a simplified schematic of a neural network 300 performing an embodiment of the method. The neural network 300 including a plurality of nodes 310, 320, 330 connected by a plurality of edges 312, 315, an edge having a weight, the nodes divided into at least an input layer 310-1 to 310-N, an output layer 350-1 to 350-N, and a plurality of hidden layers 320, the neural network 330 also including the masking function that applies to an at least one hidden layer 320.

For TSP, the simplest way is to try all permutations and see which one is the shortest using brute-force search. The computational complexity is within a polynomial factor of *O(n!).* The solution, however, becomes impractical even 10 nodes leading to a search of 3,628,800 possible combinations. It is natural to leverage the heuristics to limit the search space, thus speed up the speed.

In real-life use cases, it often applies the constraint, to make the heuristics learning challenge. For example, every route has different traffic conditions depending on the time of day, the route may change the driving direction at different times, and a waypoint or location has certain business hours or preferred delivery schedules. Neural networks are a very powerful solution to learn from data, and reinforcement learning can without supervised labeling.

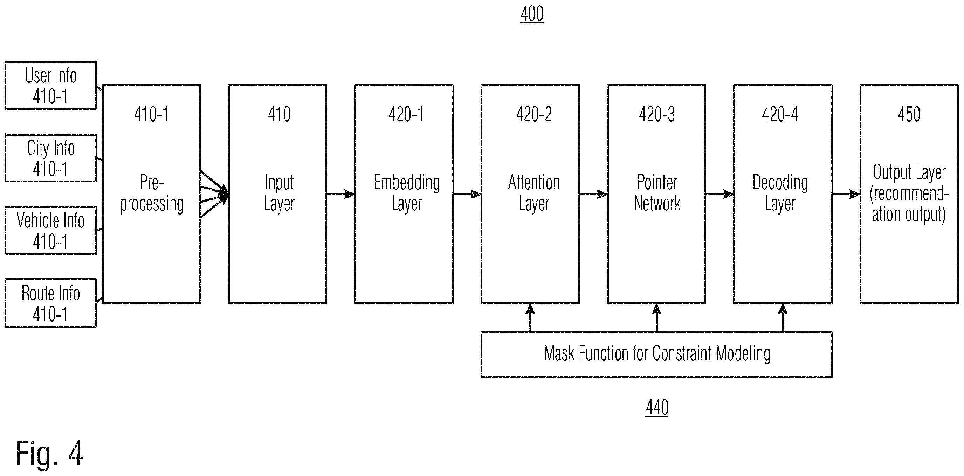

**Fig. 4** shows an embodiment of a method of training the neural network 400. The method comprising providing the waypoint information and the parameter information to the input layer 410 wherein the input layer 410 processes the waypoint information and the parameter information 410-1 to 410-5 into a plurality of static tensors and dynamic tensors. Waypoint and parameter information 410-1 to 410-5 may be raw data from user devices, available information from within the vehicle system, available information from city (e.g. modality information (train, airport), or route information (traffic), etc. The method further comprises conducting an initial pass through the plurality hidden layers 420-1 to 420-4 to determine the initial sample route, update the dynamic tensors for the initial sample route, and initialize the mask function based on the static tensors and the dynamic tensors. The method continues by conducting a plurality of further passes through the plurality of hidden layers to adjust the weight of the edges, apply the mask function 440 wherein the mask function constrains the nodes of the at least one hidden layer 420-1 to 420-4, determine the further sample route and updated dynamic tensors for the further sample route, and update the masking function based on the updated tensors. The method concludes by receiving a state of the neural network at the output layer 450.

In another embodiment, the at least one hidden layer comprises at least one of the group of an embedder layer, attention layer, pointer-network layer, or decoder layer.

Hidden layers 420-1 to 420-4 may include an embedding layer 420-1, where data is transformed to high dimensional space and stored in hidden states of the network. An attention layer 420-2 where the attention mechanism enables to add a guided local search, given the current input nodes from the sampled batch. In other words, sampled indices that are resulting in a good solution are sampled more often than indices that result in a bad solution, which is the objective function of the optimization problem. A porter network layer 420-3 calculates the next state given the previous state and embedded inputs. Further, it calculates the probability of selecting the next state. In the pointer network layer 420-3 there may be a gated recurrent unit that computes the representation of the current decoder output. The decoder 420-4 is within the forward pass of the neural network 400. The decoder contains a for loop where the last hidden state is computed. From the pointer network 420-3 the decoder 420-4 yields the probabilities and hidden state based on the current static, dynamic input samples. The decoder 420-4 applies the mask to the current probabilities and sets the indices to 0 that are not allowed to sample for the current batched TSP sample (input). If the network 400 is in training mode, the decoder 420-4 applies a categorical multinomial sampling on the calculated index probabilities (sometimes those probabilities are called logits.) So, during training, categorical sampling is applied. If the actor is set into validation mode (for the validation step at the end of the learning epoch) the decoder applies a greedy sampling, so it takes the indices with the highest probability. Subsequently, the dynamic update function is applied in the for loop to update the dynamic features. Finally, the sampled indices and the index probabilities are collected and bootstrapped into tensors which are the output of the decoder.

If the learning routine is finished after learning all preset learning epochs and validation steps within and at the end of those learning epochs, the network saves the best performing network state to make index predictions for the TSP. In other words, new test data that has not been seen before serves as input for the network (actor forward pass) and the network can make a prediction. The prediction is the output 450 of the network and contains the predicted indices and their probabilities.

In another embodiment method, the mask function 440 applies to at least the attention 420-2, pointer-network 420-3, and decoder layers 420-4. The mask generally removes impossible sampling solutions depending on the features. After some index sequences are sampled, the mask tracks the invalid solutions and removes them from succeeding sampling steps. This is done by marking the invalid tensor entries by a 0, (since the matrix was initialized by all ones.). For the time window example coming earlier is acceptable, so therefore you can use the soft constraint mask. For arriving too late at a node of the TSP, a hard constraint must be modeled. The mask is applied after a node is visited.

In an embodiment of the method, prior to conducting an initial forward pass the edges of the nodes are stochastically weighted. In an additional embodiment, the method may include preprocessing the waypoint information prior to providing the waypoint information to the input layer. Raw waypoint and parameter information 410-1 to 410-5 may be pre-processed so that it can fit in the required data or tensor structure and so that it can be fed to the pointer network forward pass function.

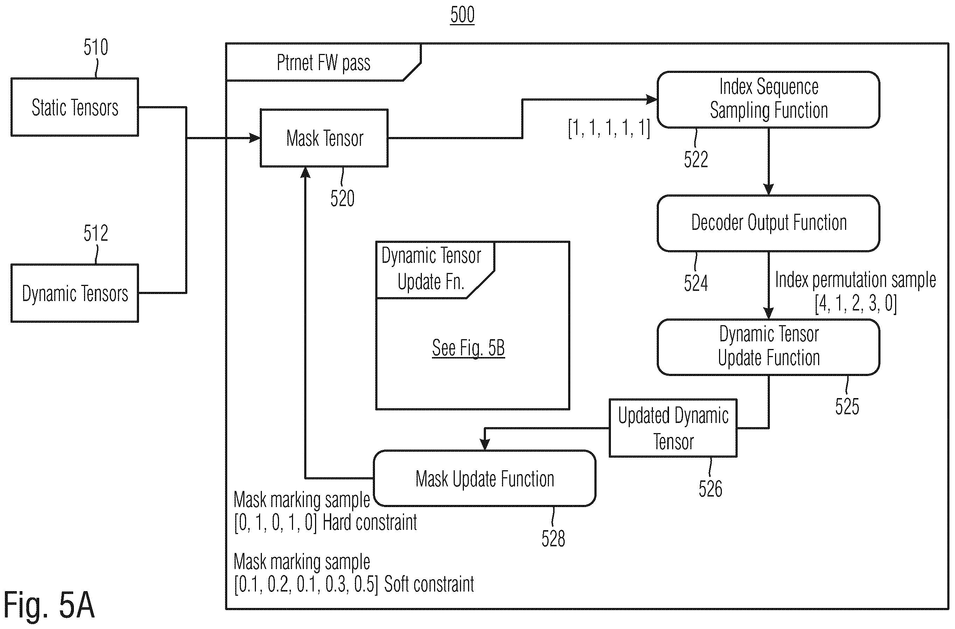

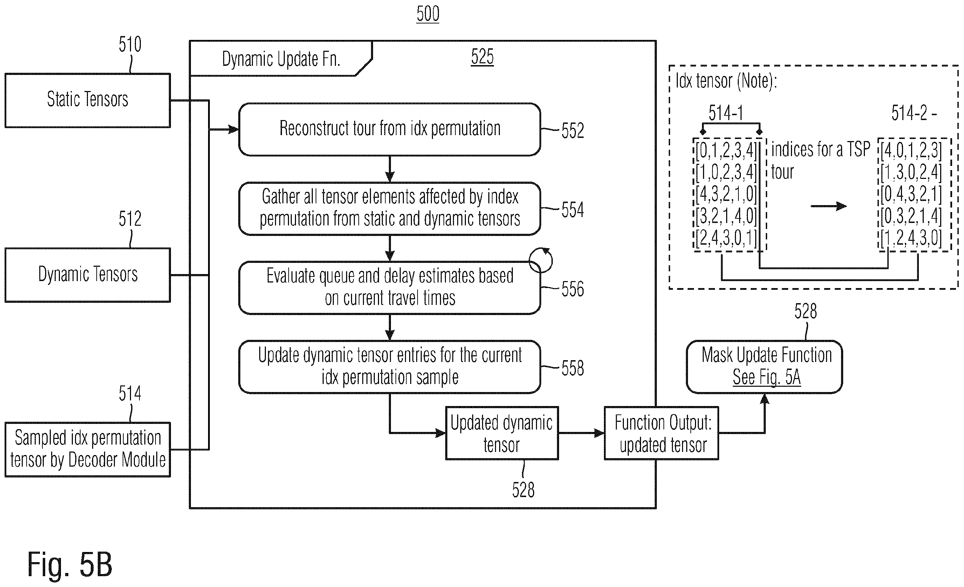

**Figs. 5A and 5B** show a block diagram of an embodiment of the masking function 500. Fig. 5A shows the forward pass through the pointer network. The mask tensor 530 is initialized with static tensors 510 and dynamic tensors 512. The mask tensor 530 is a Boolean multidimensional matrix that is initialized with 1 values [1, 1, 1, 1, 1]. The index sequence sampling function 522 involves a forward pass through the softmax of the pointer network which takes the assignment probabilities and the mask tensor 530 as input. An index permutation sample after this may be [4, 1, 2, 3, 0].

Fig. 5B shows the dynamic tensor update function 525. The function receives static tensors 510, which may include node indices and the distances between nodes, dynamic tensors 412, which may include all features that are dynamically updated (such as, approximate current travel time based on distance from routing engine, queue and delay estimates), and sampled index permutation tensor received from the decoder output function 524, which the current tensor index permutation sample by the decoder. The dynamic tensor update function 525 the reconstructs 552 the tour from the index permutation. This allows the current sampled TSP tour to be reconstructed and all required features can be looked up and accessed. A gather function 554 gathers all tensor elements affected by the index permutation from the static 510 and dynamic tensors 512. The Gather function collects and bootstraps all affected tensor elements by the current index permutation sample to a new tensor.

Then dynamic tensor update function 525 evaluates 556 the queue and delay estimates based on current travel times. Current travel times must be accessible by the routing engine and updated values must be present.

The dynamic tensor 512 at this point has three entries in the feature dimension for the idex [0, 1, 2, 3, 4]:

[0.2, 0.3, 0.2, 0.2, 0.2]     Current arrival times $t_c$

[0.2, 0.2, 0.2, 0.2, 0.2]     Updated queue times for early arrival $t_q = |t_c - t_a|$

[0.2, 0.2, 0.2, 0.5, 0.2]     Updated delay times for late arrival $t_d = |t_d - t_c|$

The index is required to traverse and reward different origin and destination possibilities in the sample problem batch. In the index tensor 514-1, the first and last column are permuted for each reward function call to obtain the index tensor 514-2.

The dynamic tensor update function 525 then outputs the updated dynamic tensor 526. Fig. 5A further shows the mask update function 528 receiving the updated dynamic tensor 526. The mask generally removes impossible sampling solutions depending on the features. After some index sequences are sampled, the mask tracks the invalid solutions and removes them from succeeding sampling steps. This is done by marking the invalid tensor entries by a zero, (since the matrix was initialized by all ones.). For the time window example coming earlier is acceptable, so therefore you can use the soft constraint mask. For arriving too late at a node of the TSP a hard constraint must be modeled. The mask is applied after a node is visited. The mask may use hard constraints, such as zeros and ones that either prohibit or allow the node to be visited (e.g. [0, 1, 0, 1, 0]. It may also use soft constraints that reduce the likelihood of a node being visited (e.g. [0.1, 0.2, 0.1, 0.3, 0.5]). It may also use a mix of both.

Additionally, any of the above-described methods may be performed by a program stored in a non-transitory machine-readable medium.

Any of the above-described embodiments may be combined with any other embodiment (or combination of examples) unless explicitly stated otherwise. The foregoing description of one or more implementations provides illustration and description but is not intended to be exhaustive or to limit the scope of embodiments to the precise form disclosed. Modifications and variations are possible in light of the above teachings or may be acquired from practice of various embodiments.

The aspects and features mentioned and described together with one or more of the previously detailed embodiments and figures, may as well be combined with one or more of the other examples to replace a like feature of the other embodiment or to additionally introduce the feature to the other embodiment.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor, or computer-readable and encode machine-executable, processor-executable, or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further embodiments may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples and embodiments recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th. ", such as a device or a circuit configured to or suited for the respective task.

Functions of various elements shown in the figures, including any functional blocks labeled as "means", "means for providing a signal", "means for generating a signal.", may be implemented in the form of dedicated hardware, such as "a signal provider", "a signal processing unit", "a processor", "a controller", as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), FPGA, read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations, or steps, which may, for instance, be substantially represented in computer-readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims might not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples/embodiments a single act, function, process, operation or step may include or may be broken into multiple sub-acts, -functions, -processes, -operations, or -steps, respectively. Such sub acts may be included and part of the disclosure of this single act unless explicitly excluded.

Furthermore, the following claims are hereby incorporated into the detailed description, where each claim may stand on its own as a separate example/embodiment. While each claim may stand on its own as a separate example, it is to be noted that-although a dependent claim may refer in the claims to a specific combination with one or more other claims-other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**Claims**

1. A method for determining a constraint optimal route connecting a plurality of waypoints using a masking function, the method comprising:

> obtaining waypoint information on the plurality of waypoints and parameter information on a plurality of route parameters,
> initially determining:
>
>> an initial sample route based on the waypoint information;
>> initial assessment information for the initial sample route; and
>> the masking function based on the parameter information and the initial assessment information,
>
> iteratively determining a plurality of further sample routes and further assessment information by:
>
>> constraining the waypoint information using the masking function,
>> determining:
>>
>>> a further sample route based on the constrained waypoint information; and
>>> further assessment information for the further sample route; and
>>
>> updating the masking function based on the further assessment information, and selecting the route connecting the plurality of waypoints from the initial sample route and the plurality of further sample routes based on the initial and further assessment information.

2. The method of claim 1 wherein the masking function sets the probability of at least one of the plurality of waypoints from appearing in the further sample route.

3. The method of claim 2 wherein the probability is binary.

4. The method of claim 2 wherein the probability is a range from 0% to 100%.

5. The method of claim 1 where initially determining the initial sample route based on the waypoint information is done stochastically.

6. The method of claim 1 where a start-point and an endpoint of a route connecting a plurality of waypoints are identical.

7. The method of claim 1 wherein the waypoint information and the parameter information are obtained from:

   a plurality of mobile devices,
   a vehicle, and
   a data source for locality information.

8. A neural network performing the method of claim 1, the neural network including a plurality of nodes connected by a plurality of edges, an edge having a weight, the nodes divided into at least an input layer, an output layer, and a plurality of hidden layers, the neural network also including the masking function that applies to an at least one hidden layer.

9. A method of training the neural network of claim 8 by annotation-free reinforcement learning, the method comprising:

   providing the waypoint information and the parameter information to the input layer wherein the input layer processes the waypoint information and the parameter information into a plurality of static tensors and dynamic tensors,
   conducting an initial pass through the plurality hidden layers to:

      determine the initial sample route;
      update the dynamic tensors for the initial sample route; and
      initialize the mask function based on the static tensors and the dynamic tensors;

   conducting a plurality of further passes through the plurality of hidden layers to:

      adjust the weight of the edges;
      apply the mask function wherein the mask function constrains the nodes of the at least one hidden layer;
      determine:

         the further sample route; and
         updated dynamic tensors for the further sample route; and

      update the masking function based on the updated tensors, and

   receiving a state of the neural network at the output layer.

10. The method of claim 9 wherein the at least one hidden layer comprises at least one of the group of a:

    embedder layer,
    attention layer,
    pointer-network layer, or
    decoder layer.

11. The method of claim 10 wherein the mask function applies to at least the attention, pointer-network, and decoder layers.

12. The method of claim 9 wherein prior to conducting an initial pass the edges of the nodes are stochastically weighted.

13. The method of claim 9 further comprising preprocessing the waypoint information prior to providing the waypoint information to the input layer.

Fig. 1

Fig. 2

Fig. 3

Fig. 4

Fig. 5A

Idx tensor (Note):

514-1

[0,1,2,3,4]
[1,0,2,3,4]
[4,3,2,1,0]
[3,2,1,4,0]
[2,4,3,0,1]

indices for a TSP tour

514-2 —

[4,0,1,2,3]
[1,3,0,2,4]
[0,4,3,2,1]
[0,3,2,1,4]
[1,2,4,3,0]

500

Dynamic Update Fn.

525

**552** Reconstruct tour from idx permutation

**554** Gather all tensor elements affected by index permutation from static and dynamic tensors

**556** Evaluate queue and delay estimates based on current travel times

**558** Update dynamic tensor entries for the current idx permutation sample

Updated dynamic tensor
528

Function Output: updated tensor

Mask Update Function See Fig. 5A
528

510 Static Tensors

512 Dynamic Tensors

514 Sampled idx permutation tensor by Decoder Module

Fig. 5B

Europäisches
Patentamt

European
Patent Office

Office européen
des brevets

# EUROPEAN SEARCH REPORT

Application Number

EP 20 17 7006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/012241 A1 (NNG SOFTWARE DEV AND COMMERCIAL LLC [HU]) 16 January 2020 (2020-01-16) * abstract * * figures 4a-9 * * pages 91-93 * * pages 125-127 * ----- | 1-13 | INV. G06Q10/04 G06Q10/06 G06Q50/28 G06Q50/30 G06N3/10 G06N3/08 |
| X | YU JAMES J Q ET AL: "Online Vehicle Routing With Neural Combinatorial Optimization and Deep Reinforcement Learning", IEEE TRANSACTIONS ON INTELLIGENT TRANSPORTATION SYSTEMS, IEEE, PISCATAWAY, NJ, USA, vol. 20, no. 10, 17 April 2019 (2019-04-17), pages 3806-3817, XP011748653, ISSN: 1524-9050, DOI: 10.1109/TITS.2019.2909109 [retrieved on 2019-10-01] * abstract * * page 3809 - page 3813 * ----- | 1-13 | |

TECHNICAL FIELDS
SEARCHED (IPC)

G06Q
G06N

The present search report has been drawn up for all claims

| Place of search | Date of completion of the search | Examiner |
|---|---|---|
| Munich | 28 August 2020 | Abdel Jaber, Wael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 7006

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2020

| Patent document cited in search report | Publication date | Patent family member(s) | Publication date |
|---|---|---|---|
| WO 2020012241 A1 | 16-01-2020 | NONE | |

EPO FORM P0459

For more details about this annex : see Official Journal of the European Patent Office, No. 12/82